# EUROPEAN PATENT SPECIFICATION

(11) **EP 1 798 558 B1**
(45) Date of publication and mention of the grant of the patent: **01.05.2013**
(21) Application number: 06026068.4
(22) Date of filing: 15.12.2006
(51) Int. Cl.: G01P 3/44, G01P 3/487, F16J 15/34

(54) **Magnetized pulser ring**
Magnetischer Impulsgeberring
Anneau d'impulsion aimanté

(30) Priority: 16.12.2005 JP 2005362726; 16.12.2005 JP 2005362727; 02.11.2006 JP 2006298354
(43) Date of publication of application: 20.06.2007
(73) Proprietor: JTEKT Corporation, Osaka-shi Osaka 542-8502 (JP)
(72) Inventor: Ishii, Yasuhiko, Chuo-ku, Osaka-shi, Osaka 542-8502 (JP); Morimura, Naoki, Chuo-ku, Osaka-shi, Osaka 542-8502 (JP); Koyagi, Katsura, Chuo-ku, Osaka-shi, Osaka 542-8502 (JP); Numata, Tetsuaki, Chuo-ku, Osaka-shi, Osaka 542-8502 (JP); Motohashi, Nobutsuna, Chuo-ku, Osaka-shi, Osaka 542-8502 (JP)
(74) Representative: Steinmeister, Helmut

(56) References cited:
- EP-A1- 0 726 468
- WO-A-2005/071362
- JP-A- 2003 166 852
- JP-A- 2003 222 150
- US-A1- 2005 007 226

## Description

### BACKGROUND OF THE INVENTION

The present invention relates to a magnetized pulsar ring used in a rolling bearing apparatus with sensor or the like capable of detecting a rotation speed.

A magnetized pulsar ring of the above kind is disclosed in WO 2005/071362 A, which represents the closest prior art. The magnetized pulsar ring shown in this document comprises all the features of the preamble of claim 1. Other magnetized pulsar rings are known from US 2005/007226, JP 2003222150 and JP2003166852.

In a railway vehicle or a motor vehicle, in order to support an axle or a rotation shaft transmitting a rotation to the axle and detect a rotation speed of the axle or the rotation shaft, there is used a rolling bearing apparatus with sensor as shown in Fig. 14 (refer to Japanese Unexamined Patent Publication No. 2003-279587).

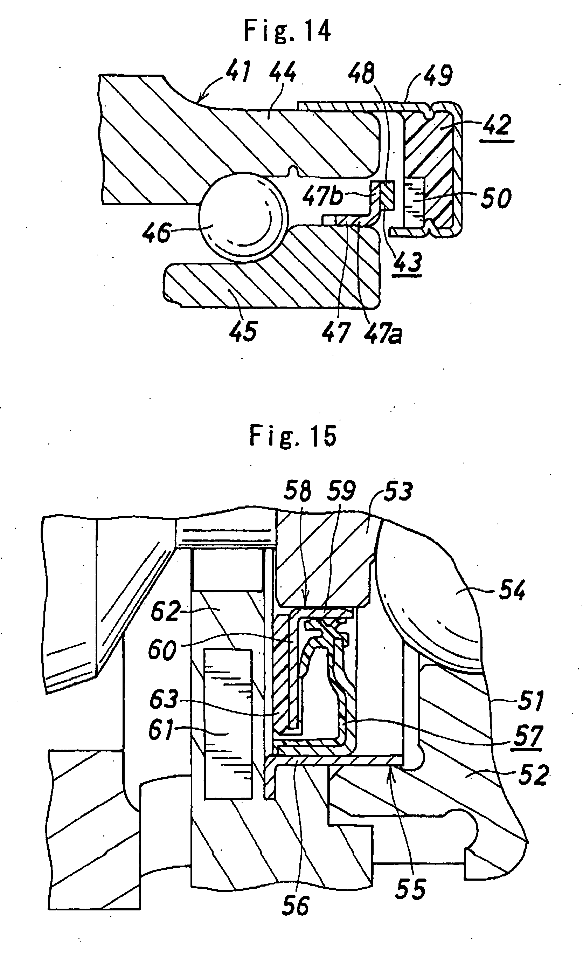

In Fig. 14, the rolling bearing apparatus with sensor is provided with a rolling bearing 41, a sensor apparatus 42 provided in the rolling bearing 41 and a magnetized pulsar ring 43 corresponding to a detected portion.

The rolling bearing 41 is provided with an outer ring 44 corresponding to a fixed ring, an inner ring 45 corresponding to a rotating ring, and a plurality of balls 46 corresponding to a plurality of rolling elements arranged therebetween,

The magnetized pulsar ring 43 is constituted by a support member 47 fixed to the inner ring 45, and a magnetized body 48 provided in the support member 47.

The sensor apparatus 42 has a case 49 fixed to the outer ring 44, and a magnetic sensor 50 provided within the case 49, and is faced to the magnetized pulsar ring 43 from an outer side in an axial direction.

The support member 47 of the magnetized pulsar ring 43 is constituted by a cylinder portion 47a fitted and fixed to an outer periphery of the inner ring 45, and an outward flange portion 47b provided in a right end portion of the cylinder portion 47a, and is relatively rotated with respect to the magnetic sensor 50 so as to generate a magnetic flux density change.

There is a case that the magnetized pulsar ring mentioned above is structured such as to be integrally formed with the seal apparatus. As the rolling bearing apparatus with sensor using this magnetized pulsar ring, there has been known the rolling bearing apparatus constituted by a rolling bearing 51 having a fixed ring 52, a rotating ring 53 and a rolling element 54 arranged between both the rings 52 and 53, a fixed side seal member 55 having a cored bar 56 fitted and fixed to the fixed ring 52 and an elastic seal 57 attached to the cored bar 56, a rotating side seal member 58 having a cylinder portion 59 fitted and fixed to the rotating ring 53 and a flange portion 60 connected to an end portion in an axial direction of the cylinder portion 59 and extending toward the fixed side seal member 55, a sensor 61 supported to the fixed side seal member 55 via a resin 62, and a magnetized body 63 provided in a side surface of the flange portion 60 of the rotating side seal member 58, as shown in Fig. 15 (refer to Japanese Unexamined Patent Publication No. 2005-098387). In this rolling bearing apparatus with sensor, the rotating side seal member 58 and the magnetized body 63 correspond to the magnetized pulsar ring, and there is an advantage that it is possible to previously assemble (pack) the fixed side seal member 55 with the sensor 61 and the rotating side seal member 58 with the magnetized body 63 (the magnetized pulsar ring).

In the magnetized pulsar ring mentioned above, there is a case that the magnetized body formed by magnetizing magnetic powders having a rubber as a binder is damaged by a foreign material or the like.

Accordingly, there can be considered that a scratch resistance is increased by employing the magnetized body as a resin bonded magnet. However, in the case that the resin bonded magnet is used, the resin bonded magnet is relatively weak for a thermal shock and tends to be cracked, so that it is hard to fix the magnetized body to the support member.

### SUMMARY OF THE INVENTION

An object of the present invention is to provide a magnetized pulsar ring which increases a scratch resistance by employing a resin bonded magnet as amagnetizedbody, and improves a thermal impact resistance and securely fixes a magnetized body in the case of using a resin bonded magnet.
In accordance with this invention, there is provided a magnetized pulsar ring comprising the features of claim 1.

In the magnetized pulsar ring in accordance with this invention, as the resin bonded magnet, it is possible to suitably employ ferrite powder + PPS (polyphenyl sulfide resin), ferrite powder + PA66 or PA12 or PA612 (polyamide resin), rare earth magnetic powder + PPS, rare earth magnetic powder + PA66 or PA12 or PA612, ferrite powder + rare earth magnetic powder + PPS, ferrite powder + rare earth magnetic powder + PA66 or PA12 or PA612 and the like. It is possible to employ combinations of the other magnetic powders and resins. Further, it is possible to add a reinforcement such as a glass fiber or the like to the resin. As the support member, a ferritic stainless steel such as SUS430 is suitable.

In the magnetized pulsar ring in accordance with this invention, there is a case that the resin bonded magnet is fixed to the support member (the slinger) via an adhesive agent layer, and is thereafter magnetized by the magnetizing apparatus in such a manner that the N poles and the S poles are arranged at a uniform interval.

In the magnetized pulsar ring in accordance with this invention, the support member is made of a metal such as a stainless steel or the like, whereby the resin bonded magnet and the support member are structured such as to have different linear expansion coefficients. Accordingly, an amount of deformation is different between the magnetized body and the support member at a thermal expanding time or a thermal contracting time, and the magnetized body tends to be cracked with respect to a thermal shock. Then, in accordance with the magnetized pulsar ring of this invention, since an elastic layer is interposed between the magnetized body and the flange portion, the difference in the amount of deformation is absorbed by the elastic layer, whereby a stress generated in the magnetized body becomes small, so that the magnetized body is prevented from being damaged.

As the elastic layer, it is possible to use a rubber sheet (a rubber layer), a resin sheet (a resin layer), an adhesive agent (an adhesive agent layer) and the like. The elastic layer can be constituted by two layers or more without being limited to one layer, and can be, for example, formed as a two-layer structure having a first adhesive agent layer adhered to the support member and a second adhesive agent layer adhered to the magnetized body, or formed as a three-layer structure having a first adhesive agent layer adhered to the support member, a second adhesive agent layer adhered to the magnetized body, and an additional elastic layer (hereinafter, refer to as "intermediate elastic layer") interposed between both the adhesive agent layers. A material of the rubber layer used as the elastic layer is preferably excellent in a heat resistance, and can employ a nitrile rubber (NBR), a hydrogenated nitrile rubber (HNBR), a fluorine-contained rubber (FKM), a silicone rubber (VMQ), an ethylene propylene rubber (EPDM) and the like.

In the case that the intermediate elastic layer interposed between the adhesive agent layers in the three-layer structure, there is a case that the magnetized body is integrally formed with the support member in accordance with an insert molding, and may be adhered to the support member by an adhesive agent after previously molding. Further, it is possible to separately execute a step of adhering the rubber layer to the support member via the first adhesive agent layer, and a step of adhering the magnetized body to the rubber layer via the second adhesive agent layer, or it is possible to execute all the adhesions, for example, at the same time as the insert molding time. The adhesionbetween the rubber layer and the support member and/or the magnetized body may be executed by a vulcanizing adhesion.

In the magnetized pulsar ring in accordance with this invention, a linear expansion coefficient adjusting material making a linear expansion coefficient of the magnetized body close to a linear expansion coefficient of the support member may be added to the magnetized body. In accordance with this structure, the amounts of deformation become equal between the magnetized body and the support member at the thermal expanding time or the thermal contracting time, and the stress generated in the magnetized body becomes small.

Further, in the magnetized pulsar ring in accordance with this invention, it is preferable that a side surface of the flange portion has a concave portion having a depth corresponding to the thickness of the elastic layer. In accordance with this structure, it is not necessary to make the magnetized body thin, but it is possible to securely prevent the thermal shock resistance from being lowered and prevent the magnetized body from easily coming off. In this case, the elastic layer may be constituted by the adhesive agent layer having only one layer. In this case, the concave portion is provided for accommodating the adhesive agent layer, and it is easy to control the thickness of the adhesive agent layer. In this case, the depth corresponding to the thickness of the elastic layer is not necessarily equal to an entire thickness of the elastic layer. In the case of the three-layer structure elastic layer, the depth of the concave portion may be set to the same magnitude as the thickness of the first adhesive agent layer, or a magnitude obtained by adding the first adhesive agent layer and the intermediate elastic layer, or the other magnitude.

Further, in the magnetized pulsar ring in accordance with this invention, the magnetized pulsar ring may include a first adhesive agent layer adhered to the support member, a second adhesive agent layer adhered to the magnetized body, and an elastic layer interposed between both the adhesive agent layers. In this case, since the adhesive agent layer serves as the elastic layer, it is possible to absorb the difference of the amount of deformation between the support member and the magnetized body, by the three-layer structure elastic layer. Further, since the structure is made such as to have the first adhesive agent layer adhered to the support member, the second adhesive agent layer adhered to the magnetized body, and the intermediate elastic layer (the third adhesive agent layer, the rubber layer, the resin layer or the like) interposed between both the adhesive agent layers, it is possible to use the adhesive agents which are respectively compatible with the support member and the magnetized body, and it is possible to securely prevent the magnetized body from easily coming off. Accordingly, in this magnetizedpulsar ring, it is easy to omit the come-off preventing portion.

In accordance with the magnetized pulsar ring of this invention, since the magnetized body is constituted by the resin bonded magnet, it is possible to increase a scratch resistance. Further, since it is possible to absorb the difference of the amount of deformation between the support member and the magnetized body, by the elastic layer, the thermal shock resistance is improved, and it is possible to securely fix the magnetized body.

### BRIEF DESCRIPTION OF THE DRAWINGS

Fig. 1 is a cross sectional view showing a first magnetized pulsar ring
Fig. 2 is a cross sectional view showing a second magnetized pulsar ring;
Fig. 3 is a cross sectional view showing a third magnetized pulsar ring;
Fig. 4 is a cross sectional view showing a fourth magnetized pulsar ring;
Fig. 5 is a cross sectional view showing a fifth magnetized pulsar ring ;
Fig. 6 is a cross sectional view showing a sixth magnetized pulsar ring;
Fig. 7 is a cross sectional view showing a seventh magnetized pulsar ring;
Fig. 8 is a cross sectional view showing an eighth embodiment of the magnetized pulsar ring in accordance with this invention;
Fig. 9 is a cross sectional view showing an embodiment of the magnetized pulsar ring in accordance with this invention;
Fig. 10 is anenlargedcross sectional view of a main portion in Fig. 9;
Fig. 11 is a cross sectional view showing another magnetized pulsar ring;
Fig. 12 is a cross sectional view along a line XII-XII in Fig. 11;
Fig. 13 is a cross sectional view showing another magnetized pulsar ring invention;
Fig. 14 is a cross sectional view showing one example of a rolling bearing apparatus with sensor to which the magnetized pulsar ring in accordance with this invention is applied; and
Fig. 15 is a cross sectional view showing a different example of the rolling bearing apparatus with sensor to which the magnetized pulsar ring in accordance with this invention is applied.

### DETAILED DESCRIPTION OF PREFERABLE EMBODIMENTS

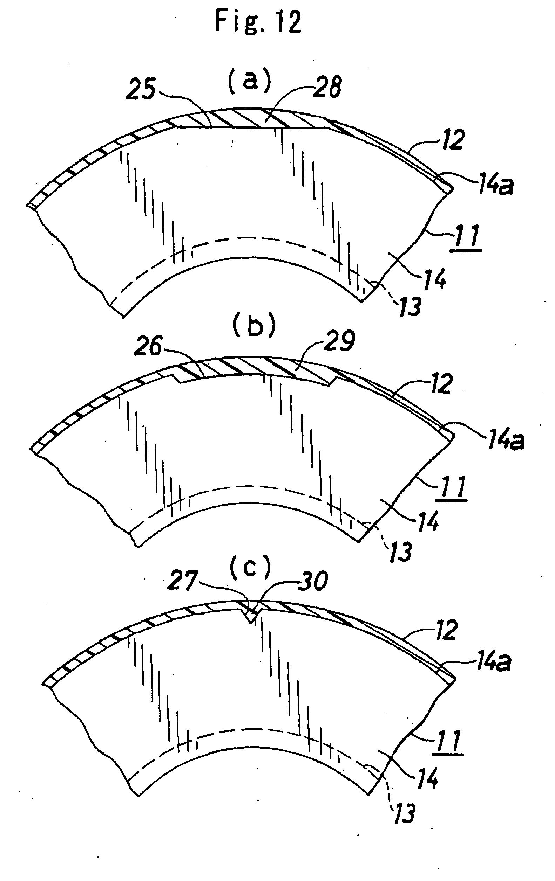

A description will be in detail given below of embodiments of this invention with reference to the accompanying drawings. In the following description, right and left respectively indicate right and left in each of the drawings except Fig. 12.

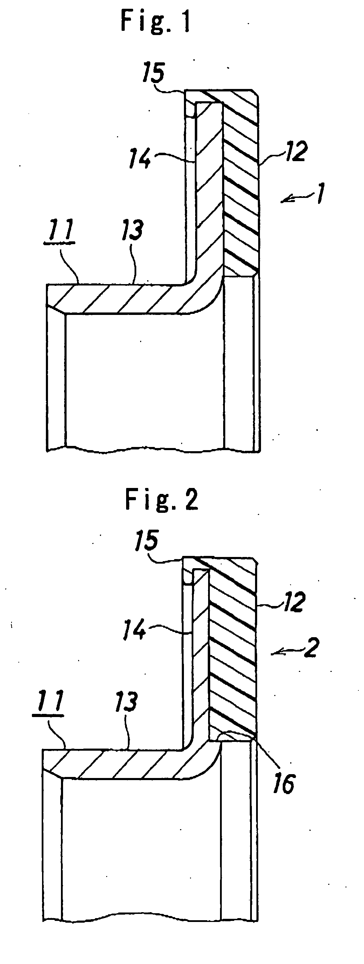

Fig. 1 shows a first magnetized pulsar ring.

In Fig. 1, a magnetized pulsar ring 1 is constituted by a support member 11 fixed to an inner ring, and a magnetized body 12 provided in a support member 11.

The support member 11 is constituted by a cylinder portion 13 fitted and fixed to an outer periphery of the inner ring, and an outward flange portion 14 provided in a right end portion of the cylinder portion 13.

The magnetized body 12 is constituted by a resin bonded magnet, and is fixed over an almost entire periphery of a right surface of the flange portion 14 of the support member 11 in accordance with an integral injection molding.

An outer periphery of the magnetized body 12 is provided with a come-off preventingportion 15 having an inverted-L shaped cross section and engaging with an outer peripheral portion of the flange portion 14, and the magnetized body 12 is prevented from coming off from the support member 11 by the come-off preventing portion 15.

The resin bonded magnet constituting the magnetized body 12 is additionally provided with a linear expansion coefficient adjusting material (a glass fiber, a carbon fiber or the like) making a linear expansion coefficient of the magnetized.body 12 close to a linear expansion coefficient of the support member 11. A proper amount of the added linear expansion coefficient adjusting material may be determined by actually executing a thermal shock test. However, the linear expansion coefficient of the magnetized body 12 is preferably set to 1 to 2 times of the linear expansion coefficient of the support member 11, and is more preferably set to 1 to 1.5 times thereof. Accordingly, an amount of deformation becomes approximately equal between the magnetized body 12 and the support member 11 at a thermal expanding time or a thermal contracting time, and a stress generated in the come-off preventing portion 15 becomes small.

Fig. 2 shows a second magnetized pulsar ring.

In this drawing, a magnetized pulsar ring 2 is constituted by a support member 11 fixed to an inner ring, and a magnetized body 12 provided in a support member 11.

The support member 11 is constituted by a cylinder portion 13 fitted and fixed to an outer periphery of the inner ring, and an outward flange portion 14 provided in a right end portion of the cylinder portion 13.

The magnetized body 12 is constituted by a resin bonded magnet, and is fixed over an almost entire periphery of a right surface of the flange portion 14 of the support member 11 in accordance with an integral injection molding.

An outer periphery of the magnetized body 12 is provided with a come-off preventing portion 15 having an inverted-L shaped cross section and engaging with an outer peripheral portion of the flange portion 14, and the magnetized body 12 is prevented from coming off from the support member 11 by the come-off preventing portion 15.

Further, an annular concave portion 16 is provided in a right surface of the flange portion 14. An inner diameter of the concave portion 16 is set to be equal to an inner diameter of the magnetized body 12, and one side surface (a left surface) of the magnetized body 12 is fitted into the concave portion 16.

A linear expansion coefficient adjusting material (a glass fiber, a carbon fiber or the like) is added to the resin bonded magnet constituting the magnetized body 12 in the same manner as the first embodiment.

An axial dimension of the magnetized pulsar ring 2 in accordance with the second embodiment is set to be equal to an axial dimension of the magnetized pulsar ring 1 in accordance with the first embodiment, and both pulsar rings are different in a point that the concave portion 16 is provided or is not provided in the side surface of the flange portion 14. Accordingly, in the structure in accordance with the second embodiment provided with the concave portion 16, the thickness of the magnetized body 12 is enlarged, and a magnetic force is enlarged at that degree.

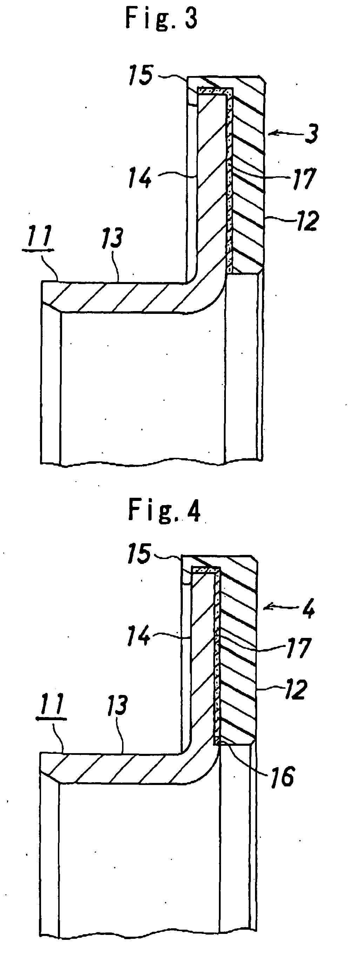

Fig. 3 shows a third magnetized pulsar ring.

In Fig. 3, a magnetized pulsar ring 3 is constituted by a support member 11 fixed to an inner ring, and a magnetized body 12 provided in a support member 11.

The support member 11 is constituted by a cylinder portion 13 fitted and fixed to an outer periphery of the inner ring, and an outward flange portion 14 provided in a right end portion of the cylinder portion 13.

The magnetized body 12 is constituted by a resin bonded magnet, and is fixed over an almost entire periphery of a right surface of the flange portion 14 of the support member 11 in accordance with an integral injection molding.

An outer periphery of the magnetized body 12 is provided with a come-off preventing portion 15 having an inverted-L shaped cross section and engaging with an outer peripheral portion of the flange portion 14, and the magnetized body 12 is prevented from coming off from the support member 11 by the come-off preventing portion 15.

An elastic layer 17 is interposed between the magnetized body 12 and the flange portion 14. The elastic layer 17 is constituted by a thin rubber sheet, and is provided not only between a side surface of the magnetized body 12 and a side surface of the flange portion 14, but also between an outer peripheral surface of the flange portion 14 and the come-off preventing portion 15 of the magnetized body 12. The elastic layer 17 absorbs a difference between an amount of deformation of the magnetized body 12 and an amount of deformation of the support member 11, whereby a stress generated in the come-off preventing portion 15 is generated becomes small.

Fig. 4 shows a fourth magnetized pulsar ring.

In Fig. 4, a magnetized pulsar ring 4 is constituted by a support member 11 fixed to an inner ring, and a magnetized body 12 provided in a support member 11.

The support member 11 is constituted by a cylinder portion 13 fitted and fixed to an outer periphery of the inner ring, and an outward flange portion 14 provided in a right end portion of the cylinder portion 13.

The magnetized body 12 is constituted by a resin bonded magnet, and is fixed over an almost entire periphery of a right surface of the flange portion 14 of the support member 11 in accordance with an integral injection molding.

An outer periphery of the magnetized body 12 is provided with a come-off preventing portion 15 having an inverted-L shaped cross section and engaging with an outer peripheral portion of the flange portion 14, and the magnetized body 12 is prevented from coming off from the support member 11 by the come-off preventing portion 15.

An elastic layer 17 is interposed between the magnetized body 12 and the flange portion 14. The elastic layer 17 is constituted by a thin rubber sheet, and is provided not only between a side surface of the magnetized body 12 and a side surface of the flange portion 14, but also between an outer peripheral surface of the flange portion 14 and the come-off preventing portion 15 of the magnetized body 12. The elastic layer 17 absorbs a difference between an amount of deformation of the magnetized body 12 and an amount of deformation of the support member 11, whereby a stress generated in the come-off preventing portion 15 is generated becomes small.

Further, an annular concave portion 16 is provided in a right surface of the flange portion 14. An inner diameter of the concave portion 16 is set to be equal to an inner diameter of the magnetized body 12, a depth thereof is set to be equal to a thickness of the elastic layer 12, and the elastic layer 12 is fitted into the concave portion 16.

An axial dimension of the magnetized pulsar ring 4 is set to be equal to an axial dimension of the magnetized pulsar ring 3 in accordance with the third embodiment, and both pulsar rings are different in a point that the concave portion 16 is provided or is not provided in the side surface of the flange portion 14. Accordingly, in the structure provided with the concave portion 16, the thickness of the magnetized body 12 is equal to that of the magnetized pulsar ring 1 , in spite that the elastic layer 12 is provided.

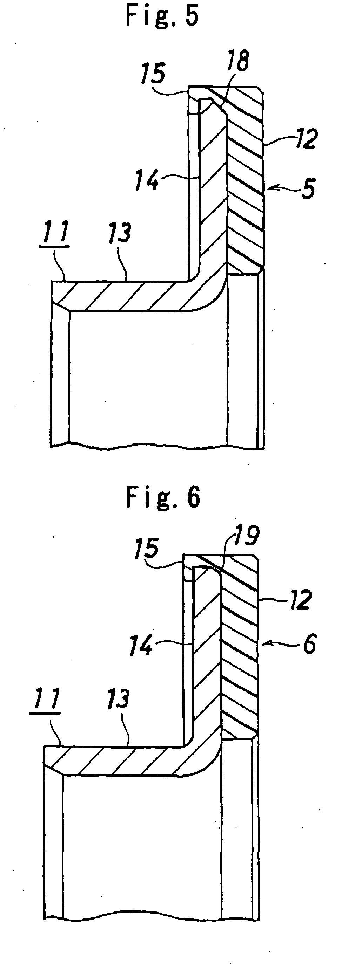

Fig. 5 shows a fifth magnetized pulsar ring.

In Fig. 5, a magnetized pulsar ring 5 is constituted by a support member 11 fixed to an inner ring, and a magnetized body 12 provided in a support member 11.

The support member 11 is constituted by a cylinder portion 13 fitted and fixed to an outer periphery of the inner ring, and an outward flange portion 14 provided in a right end portion of the cylinder portion 13.

The magnetized body 12 is constituted by a resin bonded magnet, and is fixed over an almost entire periphery of a right surface of the flange portion 14 of the support member 11 in accordance with an integral injection molding.

An outer periphery of the magnetized body 12 is provided with a come-off preventing portion 15 having an inverted-L shaped cross section and engaging with an outer peripheral portion of the flange portion 14, and the magnetized body 12 is prevented from coming off from the support member 11 by the come-off preventing portion 15.

A right corner portion in an outer periphery of the flange portion 14 of the support member 11 is chamfered by a flat slope surface 18. Accordingly, a stress applied to the come-off preventing portion 15 is dispersed, it is possible to make the come-off preventing portion 15 thick, and the stress generated in the come-off preventing portion 15 becomes small.

Fig. 6 shows a sixth magnetized pulsar ring. In the following description, the same reference numerals are attached to the same structures and a description thereof will be omitted.

In a magnetized pulsar ring 6, a right corner portion in an outer periphery of the flange portion 14 of the support member 11 is chamfered by a curved surface 19. Accordingly, a stress applied to the come-off preventing portion 15 is dispersed, it is possible to make the come-off preventing portion 15 thick, and the stress generated in the come-off preventing portion 15 becomes small.

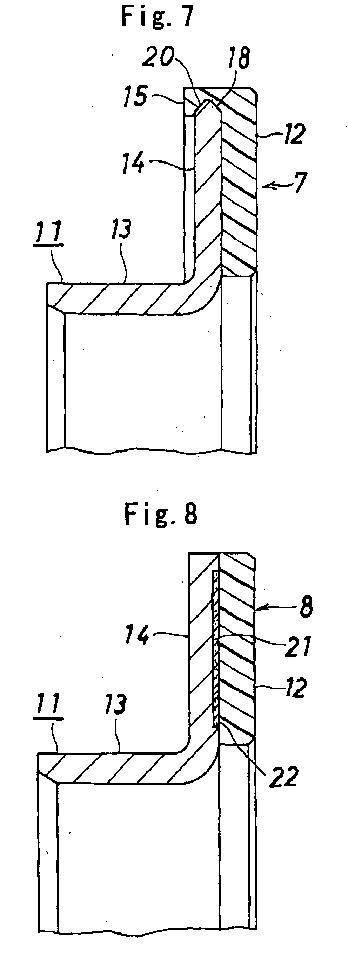

Fig. 7 shows a seventh magnetized pulsar ring. In the following description, the same reference numerals are attached to the same structures and a description thereof will be omitted.

In a magnetized pulsar ring 7, a right corner portion in an outer periphery of the flange portion 14 of the support member 11 is chamfered by a flat slope surface 18, and a left corner portion in the outer periphery is chamfered by a flat slope surface 20. Accordingly, a stress applied to the come-off preventing portion 15 is dispersed, it ispossible to make the come-off preventing portion 15 thick, and the stress generated in the come-off preventing portion 15 becomes small.

In this case, the structure may be made such that the linear expansion coefficient adjusting material may be added to the resin bonded magnet constituting the magnetized body 12, or the structure may be made such that the elastic layer 17 is interposed between the magnetized body 12 and the flange portion 14. It is possible to obtain the magnetized pulsar ring having a higher reliability.

Fig. 8 shows an eighth embodiment of the magnetized pulsar ring in accordance with this invention.

In the drawing, a magnetized pulsar ring 8 is constituted by a support member 11 fixed to an inner ring, and a magnetized body 12 provided in a support member 11.

The support member 11 is constituted by a cylinder portion 13 fitted and fixed to an outer periphery of the inner ring, and an outward flange portion 14 provided in a right end portion of the cylinder portion 13.

The magnetized body 12 is constituted by a resin bonded magnet, and is fixed over an almost entire periphery of a right surface of the flange portion 14 of the support member 11 by an adhesive agent layer 21.

An annular concave portion 22 is provided in a right surface of the flange portion 14. A dimension of the concave portion 22 corresponds to a dimension of the adhesive agent layer 21, and an entire of the adhesive agent layer 21 is fitted into the concave portion 22. A thickness of the magnetized body 12 is equal to that shown in Fig. 4, and a magnetic force is larger than that shown in Fig. 3. On the other hand, the come-of f preventing portion 15 mentioned above is omitted, and it is possible to prevent the magnetized body 12 from coming off from the support member 11 by the adhesive agent layer 21.

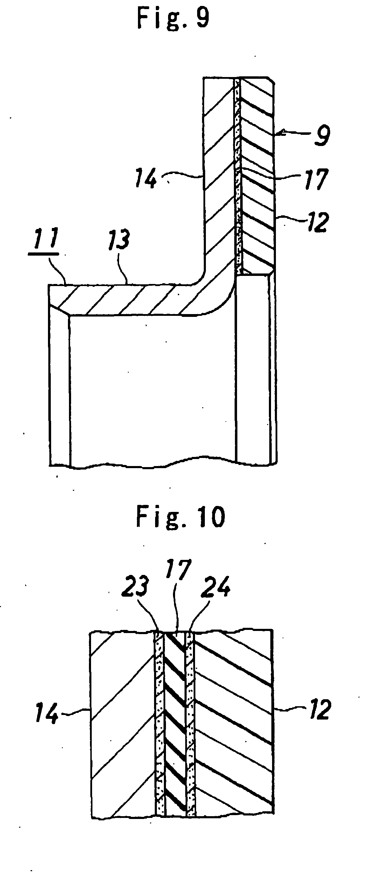

Fig. 9 shows an embodiment of the magnetized pulsar ring in accordance with this invention.

In the drawing, a magnetized pulsar ring 9 is constituted by a support member 11 fixed to an inner ring, and a magnetized body 12 provided in a support member 11.

The support member 11 is constituted by a cylinder portion 13 fitted and fixed to an outer periphery of the inner ring, and an outward flange portion 14 provided in a right end portion of the cylinder portion 13.

The magnetized body 12 is constituted by a resin bonded magnet, and an intermediate elastic layer 17 made of a rubber is interposed between the magnetized body 12 and the flange portion 14 of the support member 11. Further, the come-off preventing portion 15 is omitted in the same manner.

As in detail shown in Fig. 10, adhesive agent layers 23 and 24 are formed in both sides of the intermediate elastic layer 17 so as to form a three-layer structure, and the magnetized body 12 is prevented from coming off from the support member 11 by these adhesive agent layers 23 and 24. The adhesive agent layer 23 brought into contact with the outward flange portion 14 of the support member 11 is formed as an adhesive agent which is compatible with a metal, and the adhesive agent layer 24 brought into contact with the magnetized body 12 is formed as an adhesive agent which is compatible with a resin. The adhesive agent layers 23 and 24 also serve as an elastic layer, and a difference of the linear expansion coefficient between the support member 11 and the magnetized body 12 is absorbed by both of the intermediate elastic layer 17 and the adhesive agent layers 23 and 24. The intermediate elastic layer 17 may be constituted by a third adhesive agent layer or a resin layer in place of the layer made of the rubber.

In this case, the three-layer structure shown in Fig. 10 can be applied to the pulsar ring having the come-off preventing portion 15 shown in Figs. 3 and 4. In accordance with this structure, it is possible to further absorb the difference of the linear expansion coefficient between the support member 11 and the magnetized body 12, and it is possible to further firmly fix the magnetized body 12 to the support member 11.

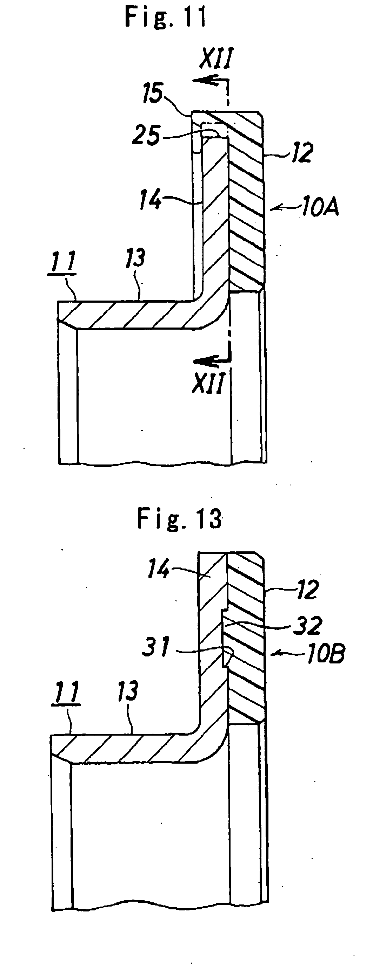

Figs. 11 and 12 show another magnetized pulsar ring.

In Fig. 11, a magnetized pulsar ring 10A is constituted by a support member 11 fixed to an inner ring, and a magnetized body 12 provided in a support member 11.

The support member 11 is constituted by a cylinder portion 13 fitted and fixed to an outer periphery of the inner ring, and an outward flange portion 14 provided in a right end portion of the cylinder portion 13.

The magnetized body 12 is constituted by a resin bonded magnet, and is fixed over an almost entire periphery of a right surface of the flange portion 14 of the support member 11 in accordance with an integral injection molding.

An outer periphery of the magnetized body 12 is provided with a come-off preventing portion 15 having an inverted-L shaped cross section and engaging with an outer peripheral portion of the flange portion 14, and the magnetized body 12 is prevented from coming off from the support member 11 by the come-off preventing portion 15.

As shown in Figs. 12(a), 12(b) and 12(c), an outer peripheral surface 14a of the flange portion 14 of the support member 11 is not formed in a circular shape, but is formed in a shape obtained by cutting a part of a circumference thereof at a predetermined interval. Accordingly, relative rotation preventing concave portions 25, 26 and 27 preventing a relative rotation of the magnetized body 12 are formed in the flange portion 14 of the support member 11. Relative rotation preventing convex portions 28, 29 and 30 are formed in the magnetic body 12 by integrally injection molding the magnetic body 12 in the support member 11. The relative rotation preventing convex portions 28, 29 and 30 are fitted to the relative rotation preventing concave portions 25, 26 and 27 of the flange portion 14. The relative rotation preventing concave portions 25, 26 and 27 may be formed by cutting the outer peripheral surface 14a of the flange portion 14 in a linear shape, as shown in Fig. 12(a), or may be formed by cutting the outer peripheral surface 14a of the flange portion 14 in a circular arc shape, as shown in Fig. 12(b), or may be formed by cutting the outer peripheral surface 14a of the flange portion 14 in a V shape, as shown in Fig. 12 (c). In other words, various shapes can be employed as far as the outer peripheral surface 14a of the flange portion 14 is formed as a noncircular shape. Further, the number of the relative rotation preventing concave portions 25, 26 and 27 is at least one, and is preferably set to plural number, and a plurality of relative rotation preventing concave portions are provided at a uniform interval in a peripheral direction.

The structure of the relative rotation preventing concave portions 25, 26 and 27 and the relative rotation preventing convex portions 28, 29 and 30 shown in Figs. 12(a), 12 (b) and 12 (c) can be combined with each of the pulsar rings provided with the come-off preventing portion 15., although an illustration will be omitted.

Fig. 13 shows another magnetized pulsar ring.

In Fig. 13, a magnetized pulsar ring 10B is constituted by a support member 11 fixed to an inner ring, and a magnetized body 12 provided in a support member 11.

The support member 11 is constituted by a cylinder portion 13 fitted and fixed to an outer periphery of the inner ring, and an outward flange portion 14 provided in a right end portion of the cylinder portion 13.

The magnetized body 12 is constituted by a resin bonded magnet, and is fixed over an almost entire periphery of a right surface of the flange portion 14 of the support member 11 in accordance with an integral injection molding.

The come-off preventing portion 15 is removed. Further, a relative rotation preventing concave portion 31 is provided in a right surface of the flange portion 14. The relative rotation preventing concave portion 31 is formed in a square shape or a fan shape, and a plurality of (for example, four) relative rotation preventing concave portions 31 are provided at a uniform interval in a peripheral direction. Relative rotation preventing convex portions 32 are formed in the magnetic body 12 by integrally inj ectionmolding the magnetic body 12 in the support member 11. The relative rotation preventing convex portions 32 are fitted to the relative rotation preventing concave portions 31 of the flange portion 14. The structure of the relative rotation preventing concave portions 31 and the relative rotation preventing convex portions 32 can be combined with each of the pulsar rings provided with no come-off preventing portion 15, although an illustration will be omitted. The come-off preventing portion 15 may be, of course, added,

In this case, the resin bonded magnet constituting the magnetized body 12 is made of rare earth magnetic powders (or ferrite powders) + resin. However, it is possible to add the linear expansion coefficient adjustingmaterial (the glass fiber, the carbon fiber or the like) making the linear expansion, coefficient of the magnetized body 12 close to the linear expansion coefficient of the support member 11. Accordingly, the thermal shock resistance of the magnetized body 12 or the like is further improved.

The magnetized pulsar rings 10A and 10B mentioned above are manufactured in accordance with the integral injection molding of arranging the support member 11 within a cavity formed in a metal mold, and injecting a resin bonded magnetic material from an injection gate provided in the metal mold. At this time, a manufacturing condition is set in such a manner that a weld generated in the magnetized body 12 by an influence of a position of the injection gate is positioned at the convex portions 28, 29, 30 and 32 of the magnetized body 12. In the case that the injection gate is provided at one position, and the resin is separated into two directions so as to be filled within the cavity, a combined portion of the resin is generated near opposite positions (positioned spaced at 180 degree) of the injection gate, and the combined portion (called as "weld") comes to a position in which the strength is weaker in comparison with the other portions. In the magnetized pulsar rings 10A and 10B, since the relative rotation preventing convex portions 28, 29, 30 and 32 have the relatively larger strength, it is possible to obtain the magnetized pulsar rings 10A and 10B having no weak position in strength, by aligning them with the weld. The number of the injection gate is not limited to one, and the weld generating position is changed in accordance with the manufacturing condition. However, a length, a number and an arranged position of the relative rotation preventing convex portions 28, 29, 30 and 32 can be optionally set, and can be easily aligned with the weld.

## Claims

1. A magnetized pulsar ring (8) comprising:
a support member (11) including a cylinder portion (13) and a flange portion (14) provided in one end of the cylinder portion (13); and
a disc-shaped magnetized body (12) provided in the flange portion (14) of the support member (11),
wherein the magnetized body (12) is constituted by a resin bonded magnet, **characterized in that** an adhesive agent layer (21) accommodated in an annular concave portion (22) provided in a side surface of the flange portion adapted (14) to control the thickness of the adhesive agent layer (21) is interposed between the magnetized body (12) and the flange portion (14).

## Patentansprüche

1. Magnetischer Impulsgeberring (8), umfassend:
ein Lagerelement (11) mit einem Zylinderbereich (13) und einem Flanschbereich (4), der in eine Ende des Zylinderbereichs (13) vorgesehen ist; und
einen scheibenförmigen magnetisierten Körper (12), der in dem Flanschbereich (14) des Lagerelements (11) vorgesehen ist,
wobei der magnetisierte Körper (12) gebildet wird durch einen mit einem Harz verklebten Magneten, **dadurch gekennzeichnet, dass** eine Klebemittelschicht (21), die in einem ringförmigen konkaven Bereich (22) in einer Seitenfläche des Flanschbereichs (14) zur Einstellung der Dicke der Klebemittelschicht (21) aufgenommen ist, zwischen dem magnetisierten Körper (12) und dem Flanschbereich (14) angeordnet ist.

## Revendications

1. Bague génératrice d'impulsions aimantée (8), comprenant :
un élément de support (11) comprenant une partie de cylindre (13) et une partie de bride (14) disposée dans une extrémité de la partie de cylindre (13) ; et
un corps aimanté en forme de disque (12) disposé dans la partie de bride (14) de l'élément de support (11),
dans laquelle le corps aimanté (12) est constitué par un aimant lié par une résine, **caractérisée en ce qu'**une couche d'agent adhésif (21) reçue dans une partie concave annulaire (22) disposée dans une surface latérale de la partie de bride adaptée (14) de façon à contrôler l'épaisseur de la couche d'agent adhésif (21) est interposée entre le corps aimanté (12) et la partie de bride (14).
